# EUROPEAN PATENT APPLICATION

(11) **EP 4 554 009 A1**
(43) Date of publication of application: **14.05.2025**
(21) Application number: 23306955.8
(22) Date of filing: 13.11.2023
(51) Int. Cl.: H01R 4/50, F16B 31/02, H01R 4/56, H01R 11/12

(54) **CONNECTOR FOR MEDIUM VOLTAGE STRANDED CONDUCTORS**

(71) Applicant: Nexans, 92400 Courbevoie (FR)
(72) Inventor: REINHOLD, Christian, 08134 Langenweissbach (DE); AGANBEGOVIC, Mirnes, 31303 Burgdorf (DE); MARKGRAF, Volker, 95195 Röslau (DE); VOGEL, Sylke, 95189 Köditz (DE)
(74) Representative: Cabinet Boettcher

(57) **Abstract**

A connector for contacting an electrical line (111) comprising a stranded conductor (112) isolated by an insulation (113) is suggested. The connector (100) comprises a cutting sleeve, a contact section, and a contact bolt. The cutting sleeve comprises a first and a second end (105,107). The second end (107) is provided with a conical bore (106) having at least one tapered section oriented away from the second end (107) of the sleeve (101). The tapered section is provided with a self-tapping internal thread (108) that is configured to be screwed onto the insulation (113) of the conductor (112). The cutting sleeve (101) is provided with a threaded hole (109) extending in an oblique direction relative to an axial direction of the conical bore (106) for accepting the contact bolt (201). Therefore, a tip (202) of the contact bolt (201) does not only exert a force in an axial direction of the cutting sleeve (101) but also in a radial direction. Hence, the force pushing out the electrical line (111) out of the cutting sleeve (101) is reduced compared with connectors where the contact bolt is screwed into the connector in an axial direction relative to the electrical line.

## Description

### Field

The present disclosure relates to a connector for medium voltage cables.

### Background

A medium-voltage network is typically used to supply electrical power to a region comprising several localities, or in cities, a city district. The term "medium-voltage" typically refers to voltages in the range above 1 kV up to and including 52 kV. Medium voltage lines usually carry only one conductor that can be in the form of a stranded conductor. In practice, when building or maintaining a medium voltage network, there is a need of connecting the ends of electrical lines. At present, connectors utilizing crimp and screw technology are established on the market. In both systems, the conductor is contacted in radial direction from outside. Regarding the crimp technology, for each diameter of the conductor to be contacted a dedicated crimp connector is required. In contrast, in the screw connection technique a single screw connector can cover a range of different diameters of the conductor to be contacted. To this end, centering rings or metal inserts are used to center different medium voltage conductors in the screw connector. The number of centering rings or metal inserts required for connection depends on the size of cross-section of the conductor. The main cross-section range of cables used in medium voltage networks covers a range from 16 mm² to 400 mm² approximately corresponding to a diameter range from 5 mm to 24 mm. For example, the supplier Nexans covers this cross-section range by screw connectors having different sizes.

To make a connection, the insulation of the cable must be stripped in a first step. Aluminium conductors are brushed to break their oxide layer and to achieve a better contact. In addition to that, any conductor fillings must be removed. Pressing screws, which are inserted in radial direction into the connector are greased on their face to reduce friction between the screws and the conductor. Furthermore, contact grease is applied inside to protect the connection against corrosion in case of a water ingress. Due to unspecified conductors, screws occasionally protrude through the connector. This has a negative impact on the quality and reproducibility of the contact. When a protrusion occurs, the connection must be reworked, e.g. by filing. One option to avoid screw protrusions is to utilize shear-off screws. In summary, tried and tested connection concepts are used in joints, slip on terminations and T-connectors. Size scaling is realized by increasing the number of pressing screws in the respective component.

EP 22 305 198.8 discloses a connector comprising a sleeve and a contact bolt. The sleeve is provided on a first end with a threaded central hole for accepting the contact bolt and on a second end with a bore having at least one tapered section provided with a self-tapping internal thread. The bore is oriented with its tapered end towards the central hole to form a through hole passing the sleeve. The tapered section of the sleeve is configured to be screwed onto the insulation of the conductor. The contact bolt is screwed into the central hole of the sleeve to reduce the space within the conical bore. Reducing the space in the conical bore has the effect that when the connector is mounted on an electrical line, the wires of the conductor are pressed against an internal wall of the conical bore. Oxide layers on the wires are broken and a good electrical contact between the conductor and the contact bolt is achieved. The conical bore centers conductors of different diameters in the sleeve and makes centering rings and inserts obsolete, which are used in other conventional screw connectors. The conical bore accepts a range of diameters of conductors. However, it may happen that the contact bolt pushes the conductor out of the sleeve and the contact has to be reworked.

In view of the limitations of existing connectors, there remains a desire for a connector that overcomes or at least improves one or more of the problems mentioned at the outset.

### Summary

According to a first aspect the present disclosure suggests a connector for contacting an electrical line comprising a stranded conductor isolated by an insulation. The connector comprises a cutting sleeve, a contact section, and a contact bolt. The cutting sleeve comprises a first and a second end. The second end is provided with an axial bore having at least one tapered section oriented away from the second end of the cutting sleeve. The tapered section is provided with a self-tapping internal thread that is configured to be screwed onto the insulation the conductor. The sleeve is provided with a threaded hole; which extends in an oblique direction relative to the axial bore for accepting the contact bolt.

The contact bolt does not only exert a force in an axial direction of the cutting sleeve but also in a radial direction. Hence, the force pushing out the electrical line out of the cutting sleeve is reduced compared with connectors where the contact bolt is screwed into the connector in an axial direction relative to the electrical line. In consequence, the risk that to the electrical line is pushed out of the conductor by the connector port is reduced. The risk that making a contact between an electrical line and the connector fails is reduced.

In an advantageous embodiment the contact bolt penetrates into the conductor at the same time in a longitudinal and radial direction of the conductor.

The oblique contact bolt exerts simultaneously longitudinal and radial force on the conductor relative to the longitudinal extension of the conductor. The radial force leads to a proportional clamping of the conductor in the cutting sleeve already from the first contact of the tip of the contact bolt with the conductor. As a result, the conductor is not only fixed in the conductor by the self-tapping thread of the contact sleeve but also by the clamping force exerted by the contact bolt.

With advantage the conical bore is configured to cut into the insulation enclosing the stranded conductor to establish a fixed mechanical connection.

The conical bore of the cutting sleeve assures that the electrical line is always centered in the connector regardless of the diameter of the electrical line. Centering rings and the like are not required. When the cutting sleeve is screwed onto the electrical line the internal thread of the conical bore establishes a firm connection between the connector and the electrical line.

In a useful embodiment the contact section is arranged at a first end of the sleeve. Advantageously, the contact section is one of a male and a female plugging connector section. Different kinds of contact sections facilitate the adaptation of the connector to different application cases.

Advantageously, the contact bolt may have a threaded tip. The threaded tip supports the breaking of oxide layers on the conductor, especially when the conductor is made from aluminum or an aluminum alloy.
It has been found to be useful to configure the contact bolt as a shear-off bolt.

### Brief description of the drawings

Exemplary embodiments of the present disclosure are illustrated in the drawings and are explained in more detail in the following description. In the figures, the same or similar elements are referenced with the same or similar reference signs. It shows:
- Fig. 1: the cross section of a connector according to the present disclosure;
- Fig. 2: the connector of Figure 1 with an inserted contact bolt;
- Fig. 3: the connector of Figure 2 with a partially screwed in contact bolt; and
- Fig. 4: the connector of Figure 3 with a fully screwed in contact bolt.

### Detailed description

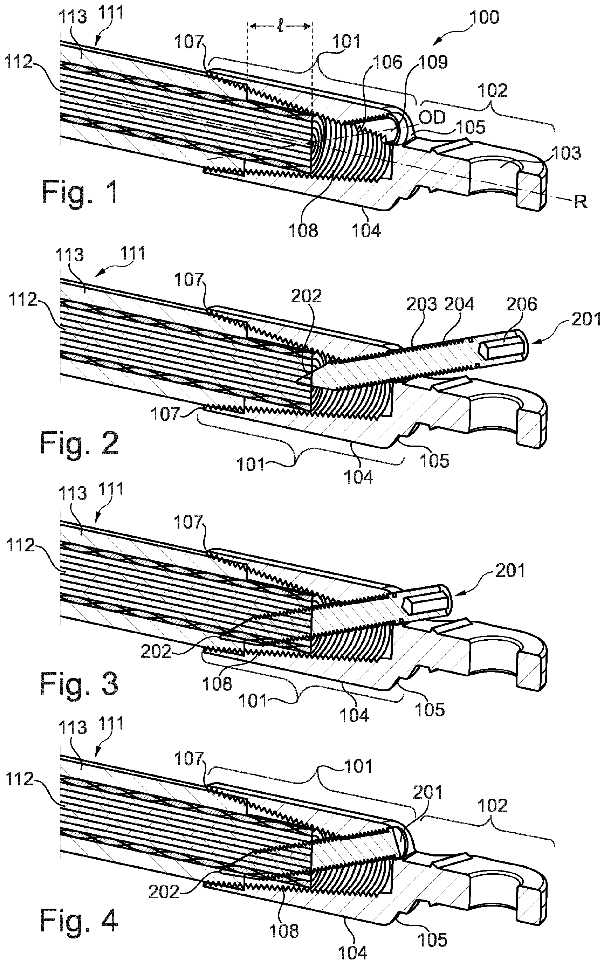

Figure 1 illustrates an embodiment of a connector 100 according to the present disclosure. The connector 100 comprises a cutting sleeve 101 and a contact section 102, which are formed together as a single piece. However, in other embodiments the cutting sleeve 101 and the contact section 102 are two separate components which are joined by any appropriate type of connection such as welding and screwing, assuring mechanical stability and good electrical conductivity between the cutting sleeve 101 and the contact section 102. The cutting sleeve 101 and the contact section 102 are made from aluminium or any other metal or metal alloy with good electrical conductivity. In the embodiment shown in Figure 1, the contact section 102 is provided with a through hole 103 that can accommodate the pressing screw to make a screwing contact. However, the connector according to the present disclosure is not limited to a specific kind of contact section. Other embodiments of the connector 100 may comprise male or female plugging contact pieces.

The cutting sleeve 101 comprises a cylindrical body 104 with a first end 105 adjacent to the contact piece 102. A conical bore 106 in a second end 107 that is oriented in an axial direction of the cylindrical body 104. The conical bore 106 is provided with an internal thread 108. The internal thread 108 is a self-tapping thread. The conical bore 106 is tapered towards the contact section 102. A threaded hole109 passes through the cutting sleeve 101. The threaded hole 109 extends in an oblique direction OD relative to the rotational axis R of the cutting sleeve 101 and cylindrical body 104, respectively.

The cutting sleeve 101 is threaded onto an electrical line111 comprising a stranded conductor 112 enclosed by an external sheath 113 that forms an insulation for the conductor 112. The conductor 112 is for example an aluminum class 2 conductor with a cross-section of 300 mm² suitable for a voltage level of 20 kV. The external sheath 113 is offset at the length l (set-down length) that is adapted to the thickness of the conductor 112. The self-tapping thread 108 cuts into the external sheath 113 of the electrical line 111 and fixes the cutting sleeve on the electrical line 111. To this end, a spanner (not shown) is a used to rotate the connector. The conical bore 106 automatically centers the connector 100 on the electrical line 111. Depending on the geometry, such as length and opening angle of the conical bore 106 in the cutting sleeve 101, a different number of conductors of the same or different voltage levels can be contacted with the same set-down lengths.

Figure 2 shows the connector 100 of Figure 1 with an inserted contact bolt 201. The contact bolt is designed as a shear-off contact bolt which breaks when predetermined torque exerted on to the contact bolt is exceeded. The contact bolt 201 has a smooth tip 202 and a shaft 203 with an external thread 204. The tip 202 has the effect that it generates a large contact force even with a small torque exerted on the contact bolt 201. A large contact force is advantageous to break any oxide layers that may be present on the wires of the conductor 112. The tip 202 of the contact bolt 201 can be cone-shaped, ball-shaped, conical, pyramid-shaped, trapezoidal-shaped, wedge-shaped, or arrow-shaped. At the end of the shaft 203 opposite to the tip 202, the contact bolt 201 is provided with a hexagon socket 206 allowing a tool (not shown) to be connected with the contact bolt 201 such that the contact bolt 201 can be screwed into the connector 100 by means of the tool. In Figure 2 the contact bolt 201 is partially threaded into the threaded hole 109 such that the tip 202 begins to penetrate into the conductor 112. Already at the early stage shown in Figure 2 the contact force of the contact bolt 201 is divided into two components, namely an axial and a radial component relative to the cylindrical body 104 of the contact sleeve. The radial component of the contact force fixes the conductor 112 when the contact bolt is screwed into the threaded hole 109 of the connector 100. The longitudinal component of the contact force acts inside the conductor 112.

In other embodiments the tip 202 is threaded or at least partially threaded. If threaded tip 202 has advantages regarding the breaking of oxide layers on the conductor 112.

Figure 3 illustrates the situation when the contact bolt 201 is threaded through the into the contact sleeve 101. In this situation shown in Figure 3 a leading portion of the contact bolt 201 has penetrated the conductor 112. In this situation the torque exerted on to contact bolt 201 has almost reached a maximum value beyond which the contact bolt shears off.

Figure 4 displays the connector 100 mounted on the electrical line 111 when the contact bolt 201 has sheared off. The contact bolt is flush with an external surface of the connector 100.

The electrical line 111 is contacted with the connector 100 in the following manner. In a first step in the external sheath 113 is stripped along a set-off length l from the conductor 112. Then the electrical line 111 is inserted into the conical bore 106 of the connector 100 as far as possible. Subsequently the connector is turned to screw the connector on to the electrical line 111 such that the self-tapping internal thread 108 of the conical bore cuts into the external sheath 113 of the electrical line 111. Then the contact bolt 201 is screwed into the threaded hole 109 until the contact bolt 201 breaks such that the contact bolt 201 is flush with the connector 100.

As soon as the tip 202 contacts the wires of the stranded conductor 112, the wires are spread and increasingly pressed against the threaded contour of the conical bore 106 by the longitudinal component of the contact force as the contact bolt 201 is screwed further into the connector 100 as shown in Figures 2 to 4. As the external wires of the stranded conductor 112 get into contact with the threaded contour of the conical bore 106, any oxide layers on the surface of the wires are broken and a good electrical contact between the wires of the conductor 112 and the cutting sleeve 101 is established. At the same time, the contact bolt 201 makes good electrical contact to the internal wires of the stranded conductor 112. As mentioned above, the radial component of the contact force clamps the conductor 112 inside the cutting sleeve and fixes it when the contact bolt 201 is screwed into the connector.

In summary, oxide layers on the wires of the stranded conductor 112 are broken and a good electrical contact between the connector 100 and the electrical line 111 is established. The breaking of oxide layers is particularly important for conductors made from aluminum or aluminum alloys.

The connector according to the present disclosure it is appropriate for making electrical contact to electrical lines in the cross-section range from 70 mm² to 300 mm² on the 20 kV voltage level.

In the claims, the word "comprising" does not exclude other elements or steps, and the indefinite article "a" does not exclude a plurality.

A single unit or device may perform the functions of multiple elements recited in the claims. The fact that individual functions and elements are recited in different dependent claims does not mean that a combination of those functions and elements could not advantageously be used.

### List of reference signs

- 100: Connector
- 101: Cutting sleeve
- 102: Contact section
- 103: Through hole
- 104: Cylindrical body
- 105: First end of sleeve
- 106: Conical bore
- 107: Second end of sleeve
- 108: Internal thread
- 109: Threaded hole

- 111: Electrical line
- 112: Conductor
- 113: External sheath

- 201: Contact bolt
- 202: Tip
- 203: Shaft
- 204: External thread

- 206: Hexagon socket

## Claims

1. Connector for contacting an electrical line (111) comprising a stranded conductor (112) isolated by an insulation (113), wherein the connector (100) comprises a cutting sleeve, a contact section (102), and a contact bolt (201), wherein the cutting sleeve (101) comprises a first and a second end (105,107), wherein the second end (107) is provided with an axial bore (106) having at least one tapered section oriented away from the second end (107) of the cutting sleeve(101), wherein the tapered section is provided with a self-tapping internal thread (108) that is configured to be screwed onto the insulation (113) the conductor (112), **characterized in that**
the cutting sleeve (101) is provided with a threaded hole (109), which extends in an oblique direction relative to an axial direction of the conical bore (106), for accepting the contact bolt (201).

2. Connector according to claim 1, wherein the contact bolt (201) penetrates into the conductor at the same time in a longitudinal and radial direction of the conductor.

3. Connector according to claim 1 or 2, wherein the self-tapping internal thread (108) of the conical bore (106) is configured to cut into the insulation (113) enclosing the stranded conductor (112) to establish a fixed mechanical connection.

4. Connector according to one of the preceding claims, wherein the contact section (102) is arranged at a first end (105) of the sleeve (201) .

5. Connector according to claim 4, wherein the contact section (102) is one of a male and a female plugging connector section.

6. Connector according to one of the preceding claims, wherein the contact bolt (201) has a threaded tip (202).

7. Connector according to one of the preceding claims, wherein the contact bolt (201) is a shear-off bolt.

## Amended claims

### Amended claims in accordance with Rule 137(2) EPC.

1. Connector for contacting an electrical line (111) comprising a stranded conductor (112) isolated by an insulation (113), wherein the connector (100) comprises a cutting sleeve, a contact section (102), and a contact bolt (201), wherein the cutting sleeve (101) comprises a first and a second end (105,107), wherein the second end (107) is provided with an axial bore (106) having at least one tapered section oriented away from the second end (107) of the cutting sleeve(101), wherein the tapered section is provided with a self-tapping internal thread (108) that is configured to be screwed onto the insulation (113) the conductor (112), wherein
the cutting sleeve (101) is provided with a threaded hole (109), , **characterized in that** the threaded hole (109) extends in an oblique direction relative to an axial direction of the conical bore (106), for accepting the contact bolt (201) and that the contact bolt (201) penetrates into the conductor at the same time in a longitudinal and radial direction of the conductor.

2. Connector according to claim 1, wherein the self-tapping internal thread (108) of the conical bore (106) is configured to cut into the insulation (113) enclosing the stranded conductor (112) to establish a fixed mechanical connection.

3. Connector according to claim 1 or 2, wherein the contact section (102) is arranged at a first end (105) of the sleeve (201) .

4. Connector according to claim 3, wherein the contact section (102) is one of a male and a female plugging connector section.

5. Connector according to one of the preceding claims, wherein the contact bolt (201) has a threaded tip (202).

6. Connector according to one of the preceding claims, wherein the contact bolt (201) is a shear-off bolt.
